# EUROPEAN PATENT APPLICATION

(11) **EP 4 497 532 A1**
(43) Date of publication of application: **29.01.2025**
(21) Application number: 24185565.9
(22) Date of filing: 28.06.2024
(51) Int. Cl.: B23P 15/02, B24B 19/14, F01D 5/28

(54) **METHOD AND APPARATUS FOR FORMING LEADING AND TRAILING EDGES ON AIRFOILS**

(30) Priority: 30.06.2023 US 202318345306
(71) Applicant: RTX Corporation, Farmington, CT 06032 (US)
(72) Inventor: MEYST, William E., Farmington, 06032 (US); LEIBFRIED, Peter E., Farmington, 06032 (US); FRISK, Kenneth A., Farmington, 06032 (US); ARRIGONI, John P., Farmington, 06032 (US)
(74) Representative: Dehns

(57) **Abstract**

A method of forming a component (100) having an airfoil (102) includes the steps of a) molding an airfoil preform (112) such that it has an airfoil (102) extending radially, and between a leading edge (103) and a trailing edge (105), with at least one of the leading and trailing edges (103, 105) being formed with a mold flash (114), b) machining away the mold flash (114), c) moving a cutting tool (124) having at least one grinder (164) with a notch (167) along the at least one of the preform leading edge (103) and trailing edge (105), the notch (167) having side surfaces (126) that will form the at least one of the leading edge (103) and trailing edge (105) on the airfoil preform (112) and d) moving the cutting tool (124) in conjunction with a cam moving through a cam path to control the position of the at least one grinder (163) along the at least one of leading and trailing edges (103, 105). A machining assembly (139) is also disclosed.

## Description

This application relates to a method and an apparatus for forming leading and trailing edges on airfoils.

### BACKGROUND OF THE INVENTION

Gas turbine engines are known, and typically include a compressor section compressing air and delivering it into a combustor. The air is mixed with fuel and ignited in the combustor and products of that combustion pass downstream over turbine rotors driving them to rotate. The turbine rotors in turn rotate compressor rotors and a propulsor rotor such as a fan.

The compressor and turbine sections typically include a plurality of rotating blades with intermediate static vanes. The blades and vanes all have an airfoil shape. As known, an airfoil extends radially, and axially between a leading and trailing edge.

Historically airfoils have been cast. More recently it has been proposed to mold airfoil bodies. In particular, ceramic matrix composite materials are being proposed for use in forming airfoils, and in particular, for use in the turbine section.

When molded, an airfoil typically has a mold flash at each of the leading and trailing edges. Currently the leading and trailing edges are finished manually, which is somewhat unreliable.

To develop fully automated machinery to form the leading and trailing edges would be expensive.

### SUMMARY OF THE INVENTION

In an aspect of the present invention, a method of forming a component having an airfoil includes the steps of a) molding an airfoil preform such that it has an airfoil extending radially, and between a leading edge and a trailing edge, with at least one of the leading and trailing edges being formed with a mold flash, b) machining away the mold flash, c) moving a cutting tool having at least one grinder with a notch along the at least one of the preform leading edge and trailing edge, the notch having side surfaces that will form the at least one of the leading edge and trailing edge on the airfoil preform and d) moving the cutting tool in conjunction with a cam moving through a cam path to control the position of the at least one grinder along the at least one of leading and trailing edges.

In an embodiment, at least the method steps c) and d) are performed on each of the leading edge and trailing edge.

In another embodiment according to any of the previous embodiments, steps a)-d) are performed on each of the leading and trailing edges.

In another embodiment according to any of the previous embodiments, the cutting tool has a pair of grinders moving serially along the at least one of the leading and trailing edges.

In another embodiment according to any of the previous embodiments, the pair of grinders are mounted within a housing. The housing is pivotally mounted on a strut such that the orientation of the notch in the grinders can change as it moves along a surface of the preform.

In another embodiment according to any of the previous embodiments, the pair of grinders are movable axially into and out of the housing as they move along the preform.

In another embodiment according to any of the previous embodiments, the pair of grinders are retained within the housing, but allowed to move axially.

In another embodiment according to any of the previous embodiments, at least one spring biases the pair of grinders outwardly of the housing.

In another embodiment according to any of the previous embodiments, an arm is received within a slot in the to retain the pair of grinders within the housing but allow them to move axially.

In another embodiment according to any of the previous embodiments, the pair of grinders are allowed to rotate in a direction generally perpendicular to a direction of rotation about the pivot pin.

In another embodiment according to any of the previous embodiments, at least one grinder is mounted within a housing. The housing is pivotally mounted on a strut such that the orientation of the notch in the grinders can change as it moves along a surface of the preform.

In another embodiment according to any of the previous embodiments, at least one grinder is movable axially into and out of the housing as it moves along the preform.

In another embodiment according to any of the previous embodiments, at least one grinder is retained within the housing, but allowed to move axially.

In another embodiment according to any of the previous embodiments, at least one spring biases the at least one grinder outwardly of the housing.

In another embodiment according to any of the previous embodiments, an arm is received within a slot in the grinder to retain the grinder within the housing but allow it to move axially.

In another embodiment according to any of the previous embodiments, the grinder is allowed to rotate in a direction generally perpendicular to a direction of rotation about the pivot pin.

In another embodiment according to any of the previous embodiments, the grinder is allowed to rotate in a direction generally perpendicular to a direction of rotation about the pivot pin.

In another embodiment according to any of the previous embodiments, the preform is formed of ceramic matrix composites.

In another embodiment according to any of the previous embodiments, the preform is to be a static vane for use in a gas turbine engine turbine section.

In another aspect of the present invention, a machining assembly includes a cam wheel and a cam path, with the cam wheel movable along the cam path. A strut system connects the cam wheel to a cutting tool. The cutting tool includes at least one grinder having a notch with curved sides to form an airfoil edge. The at least one grinder is received in a housing, and the housing is pivotable relative to the strut system.

The present disclosure may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1 schematically shows a gas turbine engine.
Figure 2A shows a component for use in a gas turbine engine of Figure 1.
Figure 2B is another view of the Figure 2A component.
Figure 3A schematically shows a first step in molding a component.
Figure 3B shows a subsequent machining step.
Figure 3C shows another subsequent machining step.
Figure 3D shows a final machining step.
Figure 3E shows a detail of an edge of the component after the Figure 3D machining step.
Figure 4A shows a machine assembly for performing the tooling steps of Figures 3B and 3C.
Figure 4B shows a machine assembly for performing the Figure 3D step.
Figure 5 shows a detail of a cam.
Figure 6A shows a tool which is part of the machine assembly of Figure 4B.
Figure 6B shows a detail of the Figure 6A tool.
Figure 7A shows a grinder for the Figure 6A tool.
Figure 7B shows an internal portion of the tool of the Figure 6A tool.
Figure 7C shows another view of the Figure 6A tool.
Figure 7D shows the grinder associated with the Figure 6A tool.

### DETAILED DESCRIPTION

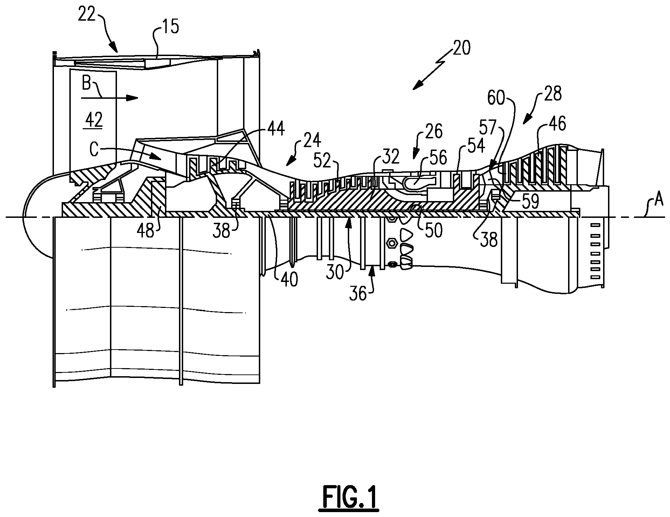

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches (1.0 m), or more narrowly no more than 75 inches (1.9 m). For example, the maximum radius of the fan blades 43 can be between 45 inches (1.1 m) and 60 inches (1.5 m), such as between 50 inches (1.3 m) and 55 inches (1.4 m). Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of Ibm of fuel being burned divided by Ibf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5}. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F) (30 °C). The TET may be greater than or equal to 2700.0 °F (1482.2 °C), or more narrowly less than or equal to 3500.0 °F (1926.7 °C), such as between 2750.0 °F (1510.0 °C) and 3350.0 °F (1843.3 °C). The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F (537.8°C), or more narrowly greater than or equal to 800.0 °F (426.7°C), such as between 900.0 °F (482.2°C) and 975.0 °F (523.9°C). The relatively low EGT can be utilized in combination with the other techniques disclosed herein to reduce fuel consumption.

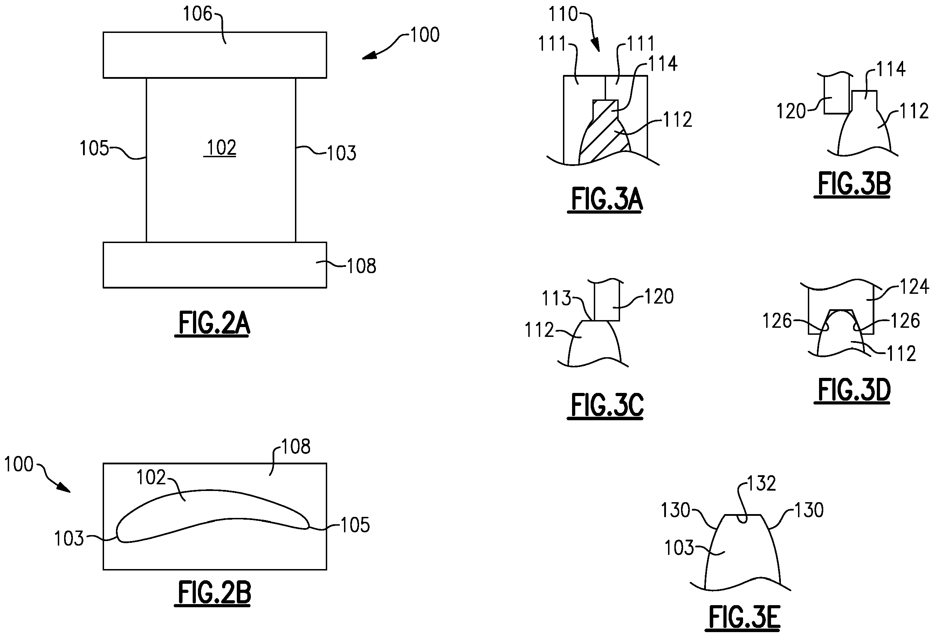

Figure 2A shows a component 100 which is shown as a static vane such as may be utilized in a turbine section for an engine like the engine shown in Figure 1. While the disclosure here is specific to a static vane, the teachings could apply to rotating blades, and other components having airfoils. As shown, there is an airfoil 102 extending radially between a radially outer platform 106 and a radially inner platform 108. The airfoil extends between a trailing edge 105 and a leading edge 103.

Figure 2B is another view of component 100. These Figures shows the airfoil 102 in a highly simplified way. In fact the airfoil and edges 103 and 105 have complex curves and shapes.

As mentioned above, historically such components were formed by casting. More recently various materials such as ceramic matrix composites ("CMC") have been proposed particularly for use in the turbine section molding is being used.

A composite material such as a polymer matrix composite ("PMC"), metal matrix composite ("MMC"), ceramic matrix composite ("CMC"), or a monolithic ceramic may be used. In specific, a CMC material may be comprised of one or more ceramic fiber plies in a ceramic matrix. Example of ceramic matrices are silicon-containing ceramics, such as but not limited to, a silicon carbide (SiC) matrix or a silicon nitride (Si3N4) matrix. Example ceramic reinforcements of the CMC are silicon-containing ceramic fibers, such as but not limited to, silicon carbide (SiC) fiber or silicon nitride (Si3N4) fibers. The CMC may be, but is not limited to, a SiC/SiC ceramic matrix composite in which SiC fiber plies are disposed within a SiC matrix. A fiber ply has a fiber architecture, which refers to an ordered arrangement of the fiber tows/yarns relative to one another, such as a 2D/3D weave, braid, knit, or a nonwoven structure. A monolithic ceramic does not contain fibers or reinforcement and is comprised of a single material. Example monolithic ceramics include silicon-containing ceramics, such as silicon carbide (SiC) or silicon nitride (Si3N4).

Although a ceramic matrix composite component is specifically disclosed, the teachings of this application could extend to airfoils formed of other materials including metals.

Figure 3A shows a challenge when molding a component such as component 100. A mold assembly 110 is schematically shown having mold halves 111. A preform 112 which will become the airfoil is shown with a mold flash 114 extending outwardly beyond an edge which may be either the leading or trailing edge.

Once the preform 112 is removed from the mold apparatus 110 a first machining step is taken to remove the flash 114. As shown in Figure 3B tool 120 is moving to remove the flash 114.

As shown in Figure 3C, the flash has now been removed leaving the preform 112. As shown, the edge 113 is flat at its outermost point.

Figure 3D shows a subsequent machining step with a cutting tool 124 having side edges 126 which form sides of the leading and trailing edges on the preform 112.

As shown in Figure 3E, after the machining of Figure 3D, the leading edge 103 now has the curved side portions 130 and a flat portion 132 at its outermost extent. The flat portion is only over a small portion of the edge, and serves to limit the cutting depth of the tool 124. As an example, the flat portion may be only over 0.001 - 0.002 inch (0.025 - 0.051 mm).

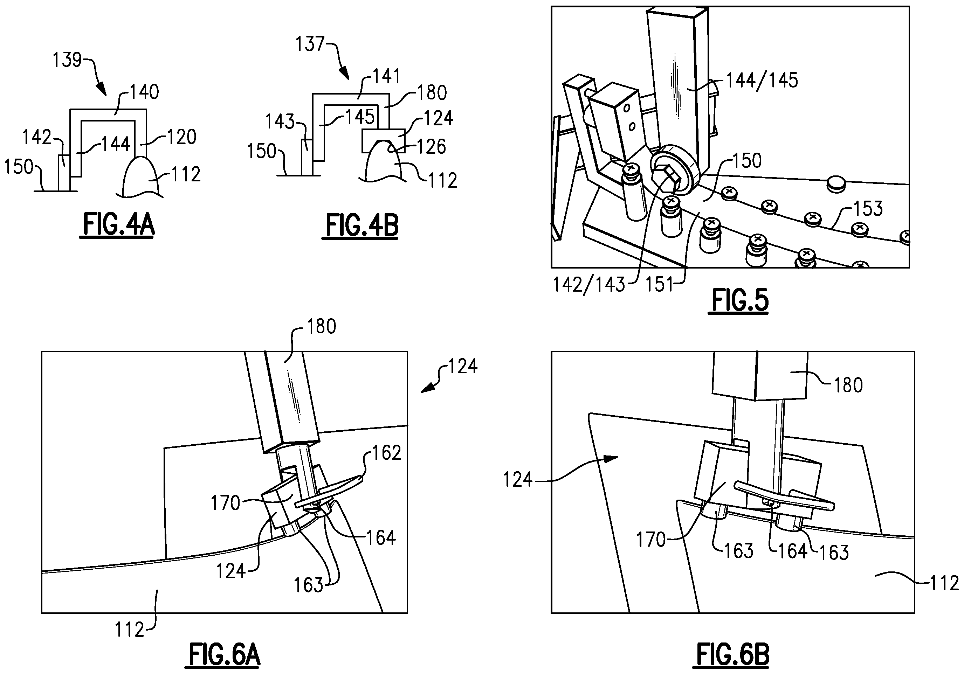

Figure 4A schematically shows a machine assembly 139 for performing the Figures 3B and 3C steps. A cam wheel 142 is attached to a strut system having rod 144 that extends outwardly to a crossing tool 140. Rod 140 is attached to a tool 120. Tool 120 is a cutting tool such as a carbide cutting tool. The initial cut is made using a standard carbide cutting tool.

As can be appreciated, the tool 120 may be moved manually along the edge of preform 112. The cam surface 150, as will be explained better below, is designed such that the cutting tool 120 will move as desired along the tip of the preform 112 to remove the flash.

Figure 4B shows a machine assembly 137 for the subsequent step of Figure 3D. Machine assembly 137 has a cam wheel 143 attached to a strut system having rod 145 which extends to a crossing rod 141. Crossing rod 141 extends to another rod 180 and the cutting tool 124 is attached to the rod 180. The cutting tool 124 will be shown to have opposed cutting edges 126 which will remove the material to form the leading edge such as shown in Figure 3E.

Here again, the tool 124 will move manually with the wheel 143 moving along a designed cam surface 150 to achieve a desired machining path. Cam surfaces 150 may be different for the two assemblies 139 and 137.

Figure 5 shows an example of the cam having the wheels 142/143 moving along a path or surface 150. Surface 150 can be shown to curve between higher points 151 and lower points 153. The shape of this path is selected to achieve desired movement of the cutting tools 120 and 124 along the preform 112.

Figure 6A shows the cutting tool 124. As shown, the shaft 180 extends to a tool housing 170 which receives two grinders 163 which are moving along the edge of the preform 112 which will become the leading or trailing edge. As shown, there is a pivot pin 164, and the housing 170 is mounted to pivot about the pin 164. A handle 162 may be utilized to assist in movement of the grinders 163 along the preform 112.

Figure 6B is an enlarged view of the tool portion 124. Here the housing 170 is shown to have pivoted about the pivot pin 164, changing the orientation of the two grinders 163.

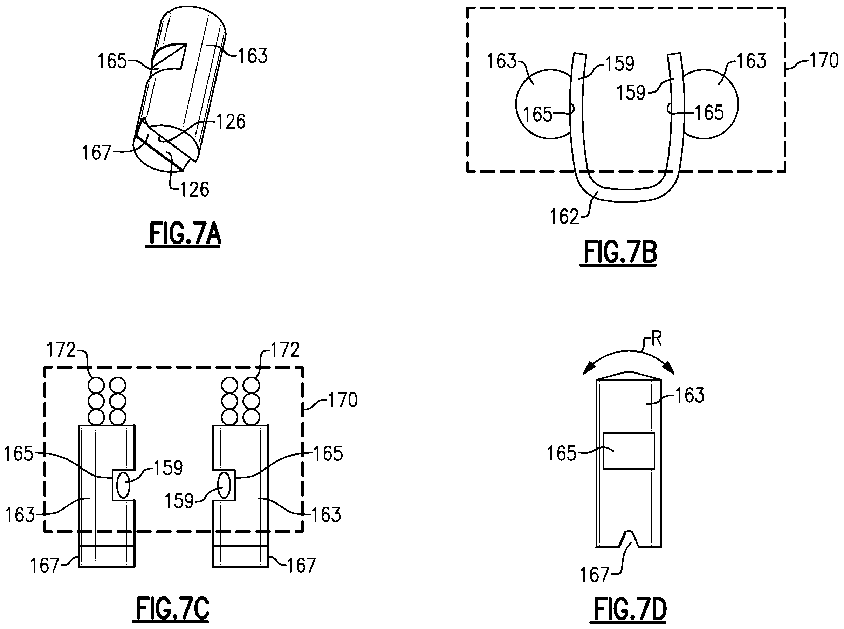

Figure 7A shows a detail of the grinders 163. There is a notch 167 having the two side edges 126 which will form the edge sides 130. There is also a slot 165 that will receive a pin to maintain the grinder 163 within the housing 170.

The sides 126 may be formed of appropriate grinding material given the material forming the preform. As an example, carbon boron nitride may be utilized, although other grinding materials may also come within the scope of this disclosure.

Figure 7B shows a view looking downwardly on the grinders 163. The handle 162 has arms 159 in slots 165.

As shown in Figure 7C the grinders 163 are spring biased within the housing 170 by springs 172. The arms 159 maintain the grinders 163 within the housing 170, but allow them to move inwardly and outwardly as they move along the edge of the preform 112.

Figure 7D shows yet another feature of the cutting tool 124. Since the grinder 163 is not restrained within the housing 170 it can also pivot in a direction R, which would generally be into and out of the plane of Figure 7C and generally perpendicularly to rotation about pivot pin 164.

The grinders 163 are thus able to move along several distinct axes and direction such that they can conform to the needed position for forming complex three-dimensional leading and trailing edges. The use of the cam ensures that the cutting tool will be moved in a semi-automated manner and accurately. No complex fully automated machinery is needed.

A method of forming a component having an airfoil under this disclosure could be said to include the steps of a) molding an airfoil preform such that it has an airfoil extending radially, and between a leading edge and a trailing edge, with at least one of the leading and trailing edges being formed with a mold flash, b) machining away the mold flash, c) moving a cutting tool having at least one grinder a notch along the at least one of the preform leading edge and trailing edge, the notch having side surfaces that will form the at least one of the leading edge and trailing edge on the airfoil preform, and d) moving the cutting tool in conjunction with a cam moving through a cam path to control the position of the at least one grinder along the at least one of leading and trailing edges.

A machining assembly under this disclosure could be said to include a cam wheel and a cam path, with the cam wheel movable along said cam path. A strut system connects the cam wheel to a cutting tool. The cutting tool includes at least one grinder having a notch with curved sides of an airfoil edge. The at least one grinder is received in a housing, and is pivotable relative to said strut system.

Although embodiments of this disclosure have been disclosed, a worker of ordinary skill in this art would recognize that modifications would come within the scope of this disclosure. For that reason, the following claims should be studied to determine the true scope and content of this disclosure.

## Claims

1. A method of forming a component (100) having an airfoil (102) comprising:
a) molding an airfoil preform (112) such that it has an airfoil (102) extending radially, and between a leading edge (103) and a trailing edge (105), with at least one of the leading and trailing edges (103, 105) being formed with a mold flash (114);
b) machining away the mold flash (114);
c) moving a cutting tool (124) having at least one grinder (163) with a notch (167) along the at least one of the preform leading edge (103) and trailing edge (105), the notch (167) having side surfaces (126) that will form the at least one of the leading edge (103) and trailing edge (105) on the airfoil preform (112); and
d) moving the cutting tool (124) in conjunction with a cam (143) moving through a cam path (150) to control the position of the at least one grinder (163) along the at least one of leading and trailing edges (103, 105).

2. The method of claim 1, wherein at least the method steps c) and d) are performed on each of the leading edge (103) and trailing edge (105).

3. The method of claim 1, wherein steps a)-d) are performed on each of the leading and trailing edges (103, 105).

4. The method of claim 1, 2 or 3, wherein the at least one grinder (163) is mounted within a housing (170), and the housing (170) is pivotally mounted on a pivot pin (164) such that the orientation of the notch (167) in the at least one grinder (163) can change as it moves along a surface of the preform (112).

5. The method of claim 4, wherein the at least one grinder (163) is movable axially into and out of the housing (170) as it moves along the preform (112).

6. The method of claim 4 or 5, wherein the at least one grinder (163) is retained within the housing (170), but allowed to move axially.

7. The method of claim 4, 5 or 6, wherein at least one spring (172) biases the at least one grinder (163) outwardly of the housing (170).

8. The method of any of claims 4 to 7, wherein an arm (159) is received within a slot (165) in the at least one grinder (163) to retain the at least one grinder (163) within the housing (170) but allow it to move axially.

9. The method of any of claims 4 to 8, wherein the grinder (163) is allowed to rotate in a direction generally perpendicular to a direction of rotation about the pivot pin (164).

10. The method as set forth in any preceding claim, wherein the at least one grinder (163) comprises a pair of grinders (163) moving serially along the at least one of the leading and trailing edges (103, 105).

11. The method of any preceding claim, wherein the preform (112) is formed of ceramic matrix composites.

12. The method of any preceding claim, wherein the preform (112) is to be a static vane for use in a gas turbine engine turbine section.

13. A machining assembly (139) comprising:
a cam wheel (143) and a cam path (150), with the cam wheel (143) movable along said cam path (150);
a strut system (141, 145, 180) connecting the cam wheel (143) to a cutting tool (124), the cutting tool (124) including at least one grinder (163) having a notch (167) with curved sides (126) to form an airfoil edge (103, 105); and
the at least one grinder (163) received in a housing (170), and the housing (170) being pivotable relative to said strut system (141, 145, 180).
